# EUROPEAN PATENT APPLICATION

(11) **EP 4 579 086 A1**
(43) Date of publication of application: **02.07.2025**
(21) Application number: 23220594.8
(22) Date of filing: 28.12.2023
(51) Int. Cl.: F04D 15/00, F04D 29/42

(54) **A LIQUID COOLING STATION AND A CASING**

(71) Applicant: Adwatec Oy, 36220 Kangasala (FI)
(72) Inventor: ALAJOKI, Teemu, 36220 Kangasala (FI); VERRONEN, Veikko, 36220 Kangasalu (FI)
(74) Representative: Kolster Oy Ab

(57) **Abstract**

A casing (5) for a centrifugal pump (21) that circulates cooling liquid between a cooling station (15), an object to be cooled and a heat-exchanger (26). The casing (5) is a single piece that comprises a channel system provided with a case (22) for a valve for guiding the cooling liquid and connections (1, 2, 3, 4) for circulating cooling liquid outside the casing (5). The invention also relates to a liquid cooling station (15).

## Description

### FIELD OF THE INVENTION

The present invention relates to a casing for a centrifugal pump circulating cooling liquid between a cooling station, an object to be cooled and a heat-exchanger. The present invention also relates to a cooling station.

### BACKGROUND OF THE INVENTION

One of the problems associated with the above arrangement is that the centrifugal pump has a structure that limits development of the liquid cooling station.

### BRIEF DESCRIPTION OF THE INVENTION

An object of the present invention is to provide a casing and a liquid cooling station so as to overcome the above problem. The object of the invention is achieved by a casing and a liquid cooling station which are characterized by what is stated in the independent claims. The preferred embodiments of the invention are disclosed in the dependent claims.

The invention is based on the idea of having a tailored casing for a centrifugal pump.

An advantage is that connections of the suction side and the delivery side can be arranged as desired. Another advantage is that it is also possible to have connections to a heat-exchanger in the same casing and they can also be arranged as desired. The above-mentioned advantages open new chances to design a cooling station.

Still another advantage is that the number of joints can be reduced since everything is integrated in the channel system of the casing. Thus, the liquid cooling station is less prone to leakages. Further, component costs and assembling costs are reduced.

A valve for guiding cooling liquid, such as a three-way valve, may also be assembled in the casing. Further, as the connections of the suction and delivery side are on the same casing it is possible to measure a pressure difference by one pressure sensor. The measurement result may be utilized in flow rate calculations.

The liquid cooling station is for keeping the coolant outlet temperature at a desired level. The liquid cooling station comprises a centrifugal pump for circulating cooling liquid through a piping between the cooling station, an object to be cooled and a heat-exchanger. The liquid cooling station may form a closed cycle. The cooling liquid may be e.g. water, de-ionized water or water-alcohol mixture, such as water-glycol or water-ethanol mixture, salt water, liquid salt, oil or other heat transfer fluid.

The centrifugal pump comprises a pump chamber surrounded by a casing. The pump chamber comprises an impeller that causes a centrifugal force that makes the cooling liquid flow. The impeller is powered by a motor through a shaft. The centrifugal pump may be a commercial pump whose casing is replaced by the casing described below.

The casing is a single piece, i.e. it is a solid and compact frame that does not contain removable or separable parts but removable or separable objects, such as valves or sensors, can be inserted in the casing. The casing may comprise positions where measurement devices or sensors may be inserted. Pressure indicators, temperature or pressure sensors, or de-airing valves may be inserted in the positions.

The casing may be manufactured by an additive manufacturing method, such as a 3D printing method. The additive manufacturing method means a process of creating the casing by building it one layer at a time. The casing may be of aluminium, plastic, titanium, or stainless steel, for example.

An advantage related to the additive manufacturing technique is that it allows a manufacture of more complex structures. For example, the channel system may comprise optimized structures that are not possible by conventional techniques. The casing may comprise walls of pockets for temperature sensors, or walls of mounting holes for pressure sensors. The walls are a seamless part of the casing, i.e. they belong to the solid and compact frame.

An advantage related to the additive manufacturing technique compared to a machining technique is a mass of the casing: A 3D printed casing may be ten-fold lighter than a machined casing. Another advantage related to the additive manufacturing technique is a chance to use topological optimization.

The topological optimization includes specifying what external forces act on a body, such as overpressure in a flow channel, or external stress in bolt fastenings. Coordinates of pipe connections to desired points are determined. Thereafter a FEM analysis is used for determining the minimum amount of material at each point of the casing that withstands the specified stresses. Finally, a 3D geometry with the minimum amount of material is generated. The 3D geometry is utilized in a manufacture of the casing in order to make a light casing. Use of material may also be optimized by adding strength enhancing textures to the outer surface of a casing. A strength enhancing texture may be e.g. a honeycomb texture.

The topological optimization may be accomplished by a computer-implemented method and a computer program.

The casing comprises a channel system provided with a case for a valve and connections for circulating the cooling liquid outside the casing. The casing may comprise a first connection that is for connecting a first pipe that carries cooling liquid to an object to be cooled and a second connection that is for connecting a second pipe that carries the cooling liquid back to the casing. A third connection is for connecting a third pipe that carries the cooling liquid to a heat-exchanger and a fourth connection is for connecting a fourth pipe that carries the cooling liquid back to the casing. Instead of the pipes there may be hoses or a piping.

Instead of having the third connection, the third pipe, the heat-exchanger, the fourth connection and the fourth pipe it is possible that the heat-exchanger is integrated in the casing.

A three-way valve is for guiding the cooling liquid. The three-way valve enables the by-pass function of the heat exchanger. The three-way valve may work either as a mixing or diverting valve. Its purpose is to keep the coolant outlet temperature at a desired level. The valve has been inserted in the case of the casing. The case and the valve may comprise threads for fastening the valve. The three-way valve functions as follows: The cooled liquid from the heat exchanger enters through the fourth connection to the three-way valve. The three-way valve guides the liquid through the first connection to the object to be cooled. The object may be e.g. power electronics. The liquid returns from the object to the casing through the second connection. The liquid is supplied to the heat exchanger through the third connection. If the liquid is cool enough to be used for cooling the three-way valve guides the liquid directly to the object to be cooled through the first connection, i.e. the liquid is not circulated through the third and fourth connections. In practice, the three-way valve may shut off the cooling liquid flow in the fourth pipe and open the cooling liquid flow through the channel system of the casing so that the cooling liquid runs to the first connection and thereafter to the object to be cooled.

The tree-way valve may be an autonomous mechanic thermostatic valve, or a valve that is provided with an electric actuator.

### BRIEF DESCRIPTION OF THE DRAWINGS

In the following the invention will be described in greater detail by means of preferred embodiments with reference to the attached drawings, in which
Figure 1 shows a perspective view of a casing;
Figure 2 shows another perspective view of the casing;
Figure 3 shows still another perspective view of the casing;
Figure 4 shows a schematic view of a liquid cooling station;
Figure 5 is a photo showing the casing;
Figure 6 shows a perspective view of the liquid cooling station;
Figure 7 shows a cross-sectional view of the casing comprising a position for a temperature sensor therein;
Figure 8 shows a cross-sectional view of the casing;
Figure 9 shows another cross-sectional view of the casing.

### DETAILED DESCRIPTION OF THE INVENTION

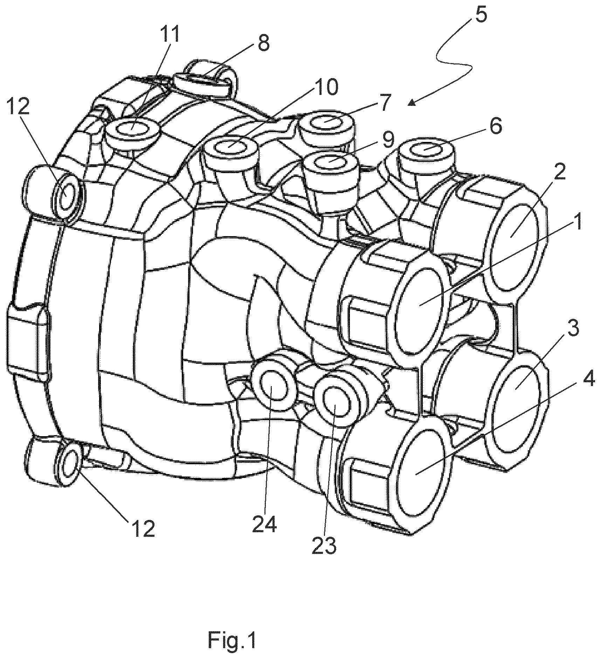

Figure 1 shows a perspective view of a casing 5. The casing 5 comprises holes 12 for fasteners, such as bolts, in order to fasten the casing 5 to a centrifugal pump 21.

The casing 5 comprises an internal channel system that comprises a first connection 1, a second connection 2, a third connection 3 and a fourth connection 4. Each above-mentioned connection may have a thread, such as an inside thread.

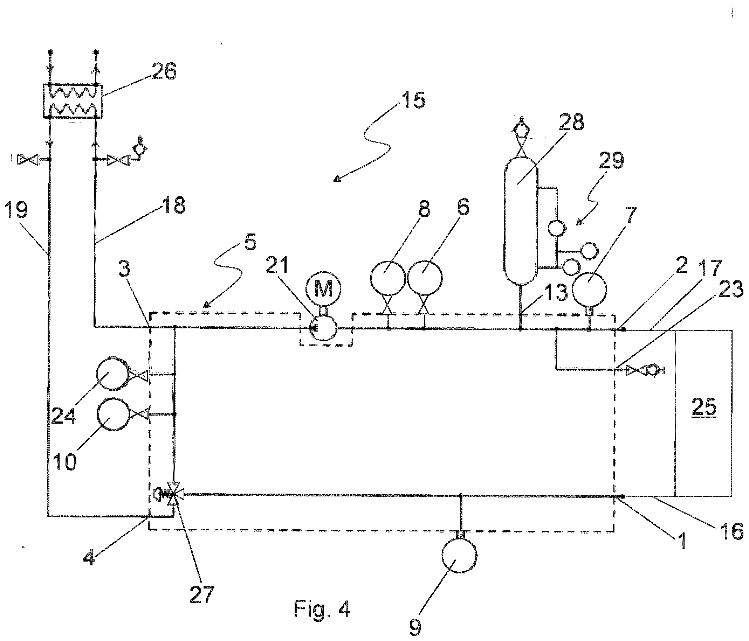

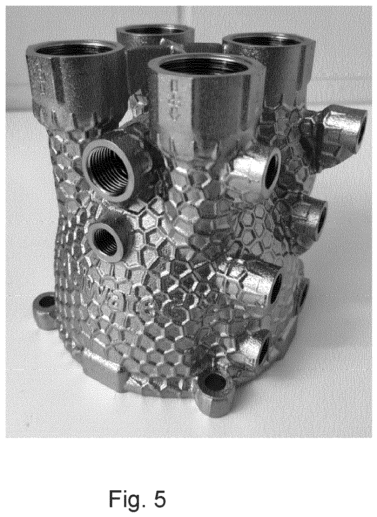

The first connection 1 is for connecting a first pipe 16 that carries cooling liquid to an object to be cooled and the second connection 2 is for connecting a second pipe 17 that carries the cooling liquid back to the casing 5. The third connection 3 is for connecting a third pipe 18 that carries the cooling liquid to a heat-exchanger 20 and the fourth connection 4 is for connecting a fourth pipe 19 that carries the cooling liquid back to the casing 5. The pipes 16, 17, 18, 19 are shown in Figs. 4 and 5. A connection 23 is for filling and emptying.

The casing 5 may comprise positions where measurement devices or sensors may be inserted. The positions 6, 10 may be for pressure indicators. The positions 8, 24 may be for pressure sensors. The positions 7, 9 may be for temperature sensors. The position 11 may be for a de-airing valve.

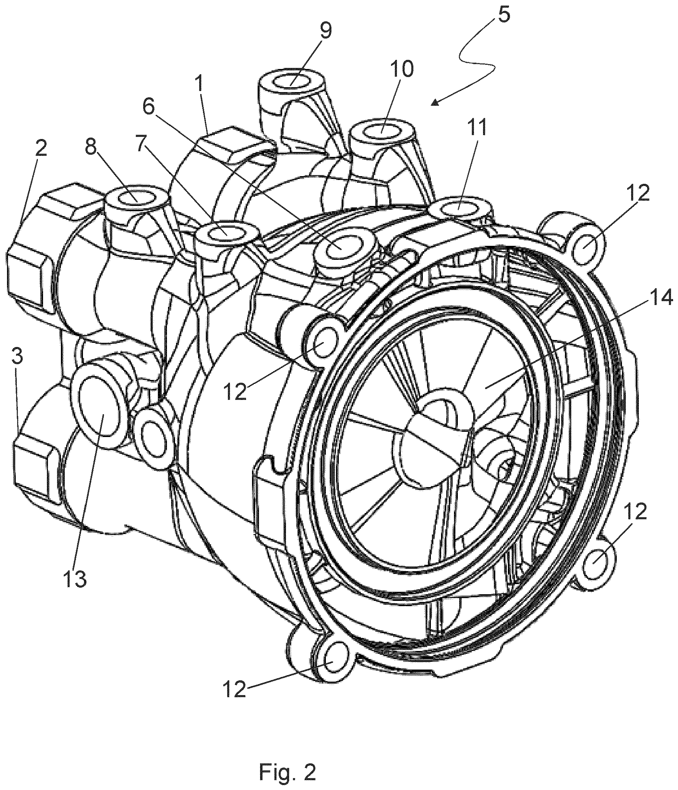

Figure 2 shows another perspective view of the casing 5 of Fig.1. Fig. 2 shows a fifth connection 13 for connecting to an expansion tank 28. A space 14 receives the chamber of the pump 21.

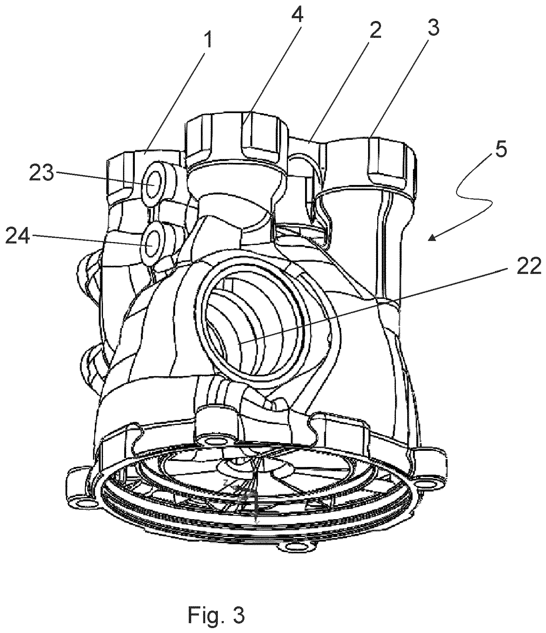

Figure 3 shows still another perspective view of the casing 5 of Figs. 1 and 2. Fig. 3 shows a case 22 for a three-way valve. The case 22 may comprise an inside thread.

Figure 4 shows a schematic view of a liquid cooling station 15 that comprises the casing 2 of Figs. 1 and 2. The casing 2 is demarcated by a dashed line in Fig. 4.

The first connection 1 is connected to the first pipe 16 that leads the cooling liquid to an object 25 to be cooled. The second connection 2 is connected to the second pipe 17 that returns the cooling liquid from the object 25 to be cooled. The third connection 3 is connected to the third pipe 18 that conveys the cooling liquid to the heat-exchanger 26. The fourth connection 4 is connected to the fourth pipe 19 that returns the cooling liquid from the heat-exchanger 26.

The liquid cooling station 15 also comprises the fifth connection 13 that is connected to the expansion tank 28. The expansion tank 28 may comprise a control system 29 of the cooling liquid. The control system 29 may comprise e.g. level indicators and switches.

The centrifugal pump 21 circulates the cooling liquid. The cooled liquid from the heat exchanger 26 enters through the fourth connection 4 to the three-way valve 27. The three-way valve 27 guides the liquid through the first connection 1 to the object to be cooled 25. The object 25 may be e.g. power electronics. The liquid returns from the object 25 to the casing 5 through the second connection 2. The liquid is supplied to the heat exchanger 26 through the third connection 3. If the liquid is cool enough to be used for cooling the three-way valve 27 guides the liquid directly to the object 25 to be cooled through the first connection 1, i.e. the liquid is not circulated through the third and fourth connections 3, 4.

The connection 23 is for filling and/or draining. The connection 23 may also be placed between the three-way valve 27 and the position 10.

There are positions where measurement devices or sensors have been inserted. The positions 7, 9 may comprise temperature sensors that measure the temperature of the cooling liquid. The positions 6, 10 may comprise pressure indicators. The positions 8, 24 may comprise pressure sensors.

Figure 5 is a photo showing the casing 5. The surface of the casing 5 comprises a strength enhancing texture.

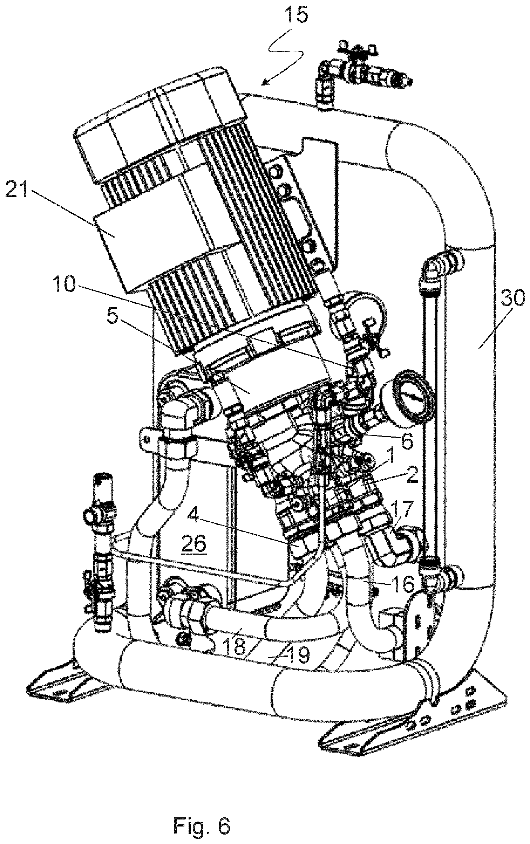

Figure 6 shows a perspective view of the liquid cooling station 15 of Fig. 4. Fig. 6 does not show the object 25 to be cooled. The liquid cooling station 15 may comprise a support frame 30 to which the expansion tank is integrated.

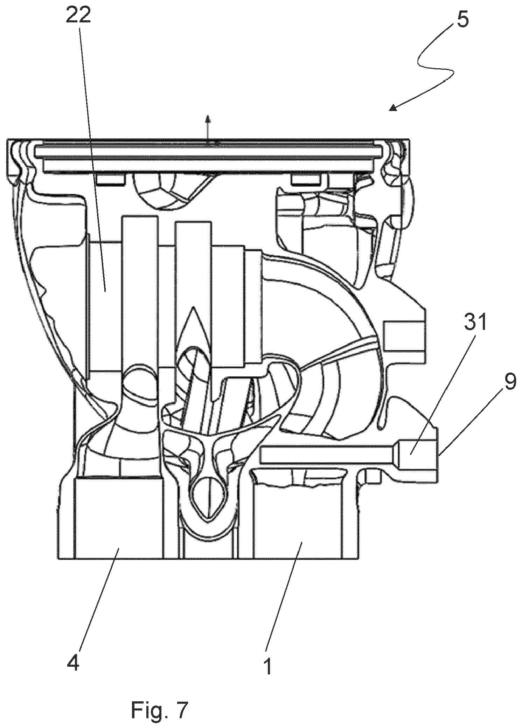

Figure 7 shows a cross-sectional view of the casing comprising a position 9 for a temperature sensor therein. The position 9 takes place in a pocket 31 that extends from the surface of the casing 5 to a flow channel whose flow temperature is to be measured. The pocket 31 is liquid tight, i.e. there is no physical contact between the pocket and the flow channel. Therefore, the temperature sensor can be removed without emptying liquid from the flow channel.

An additive manufacturing method, such as 3D printing, may be used for the pocket 31. By using the additive manufacturing method the pocket 31 can be integrated to the rest of the casing 5 and thus, there are fewer assemblies and joints that could leak. Also material savings are remarkable.

Figure 7 shows only an example of the position of temperature sensor. The position may be in another location or it may be shaped differently.

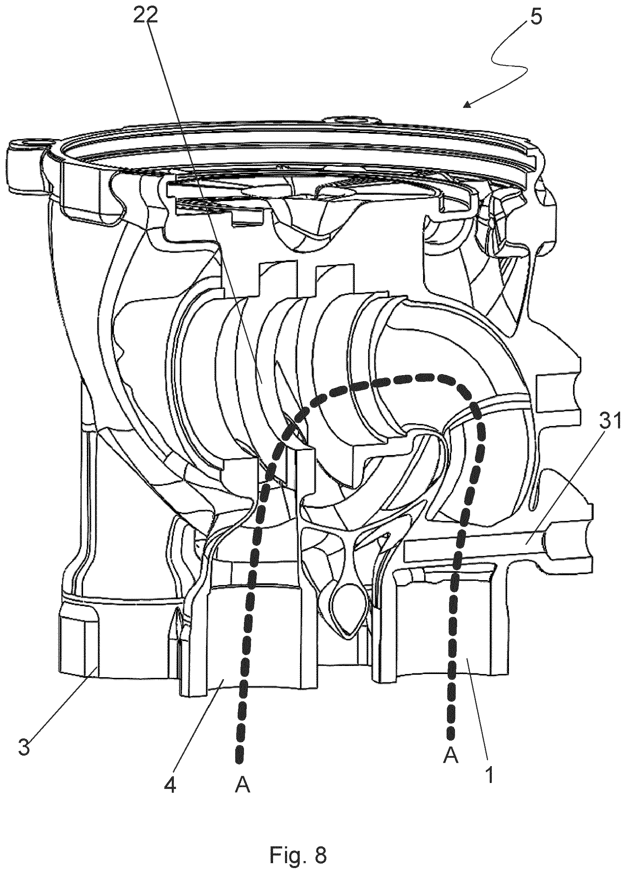

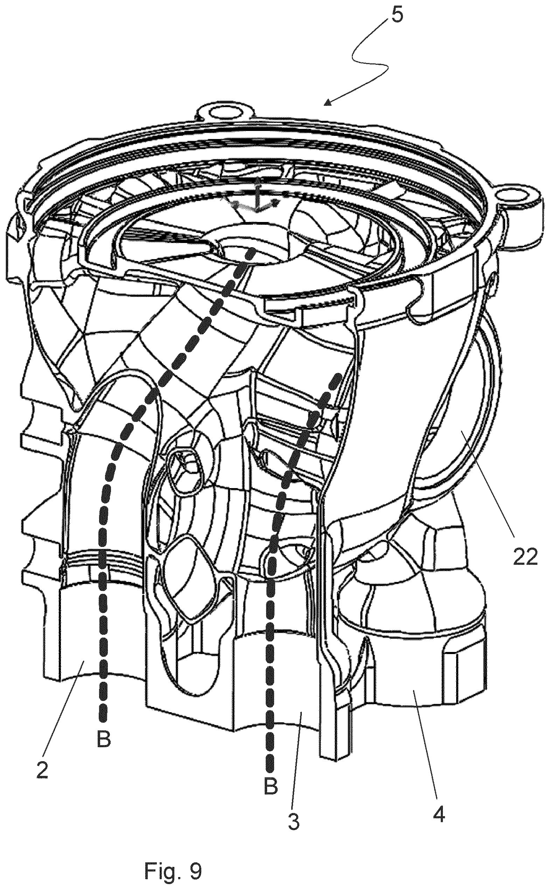

Figures 8 and 9 show a cross-sectional views of the casing 5. The casing 5 comprises the case 22 for the three-way valve. Dashed lines A and B show a path of cooling liquid. The centrifugal pump 21 circulates the cooling liquid. The cooling liquid flows through the first connection 1 to an object 25 to be cooled. The cooling liquid is returned from the object 25 to be cooled through the second connection 2. The cooling liquid flows through the third connection 3 to the heat-exchanger 26, i.e the cooling liquid follows the path B in Fig. 9. The cooling liquid is returned from the heat-exchanger 26 through the fourth connection 4 and thereafter to the first connection 1, i.e. the cooling liquid follows the path A in Fig. 8. If the liquid is cool enough to be used for cooling the cooling liquid is directly guided to the object 25 to be cooled through the second connection 2 and the first connection 1, i.e. the liquid is not circulated through the third and fourth connections 3, 4.

It will be obvious to a person skilled in the art that, as the technology advances, the inventive concept can be implemented in various ways. The invention and its embodiments are not limited to the examples described above but may vary within the scope of the claims.

## Claims

1. A casing (5) for a centrifugal pump (21) circulating cooling liquid between a cooling station (15), an object to be cooled and a heat-exchanger (26), **characterized in that** the casing (5) is a single piece that comprises a channel system provided with a case (22) for a valve for guiding the cooling liquid and connections (1, 2, 3, 4) for circulating cooling liquid outside the casing (5).

2. The casing according to claim 1, **characterized in that** the casing (5) comprises positions for temperature sensors.

3. The casing according to claim 1 or 2, **characterized in that** the casing (5) comprises positions for pressure sensors.

4. The casing according to any preceding claim, **characterized in that** the manufacturing technique of the casing (5) is an additive manufacturing technique.

5. The casing according to any preceding claim, **characterized in that** the casing (5) comprises a strength enhancing texture on the outer surface of a casing (5).

6. The casing according to any preceding claim, **characterized in that** each connection (1, 2, 3, 4) comprises an inside thread.

7. A liquid cooling station (15) comprising a centrifugal pump (21) for circulating cooling liquid between the cooling station (15), an object to be cooled and a heat-exchanger (26) and a valve for guiding the cooling liquid, the centrifugal pump (21) comprises a pump chamber surrounded by a casing (5), **characterized in that** the casing (5) is a single piece that comprises a channel system provided with a case (22) for the valve and connections (1, 2, 3, 4) for circulating the cooling liquid outside the casing (5).

8. The liquid cooling station according to claim 7, **characterized in that** the casing (5) comprises positions (7, 9) for temperature sensors and temperature sensors assembled in the positions (7, 9).

9. The liquid cooling station according to claim 7 or 8, **characterized in that** the casing (5) comprises positions (8, 24) for pressure sensors and pressure sensors assembled in the positions (8, 24).

10. The liquid cooling station according to any preceding claim, **characterized in that** the valve is a three-way valve (27).
